Europäisches Patentamt

European Patent Office

Office européen des brevets

(19)

(11) EP 0 584 894 B1

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(51) Int Cl.$^6$: **G01P 7/00**

(21) Anmeldenummer: **93250173.7**

(22) Anmeldetag: **17.06.1993**

(54) **Verfahren zum Ermitteln der Auffahrgeschwindigkeit eines schienengebundenen Wagens auf ein Hindernis und Vorrichtung zur Durchführung des Verfahrens**

Method and apparatus for determining the impact speed of a railway wagon against an obstacle

Procédé et dispositif de détection de la vitesse tamponnage d'un wagon sur rail avec un obstacle

(84) Benannte Vertragsstaaten:
**AT BE CH DE DK ES FR IT LI LU NL SE**

(30) Priorität: **25.08.1992 DE 4228202**

(43) Veröffentlichungstag der Anmeldung:
**02.03.1994 Patentblatt 1994/09**

(73) Patentinhaber: **SIEMENS AKTIENGESELLSCHAFT**
**80333 München (DE)**

(72) Erfinder:
- **von Jena, Alexander, Dr.**
  **D-8000 München 2 (DE)**
- **Talke, Wolfgang, Dr.**
  **D-3720 Blankenburg (DE)**

(56) Entgegenhaltungen:
**EP-A- 0 433 756        US-A- 4 752 053**

- **PATENT ABSTRACTS OF JAPAN vol. 7, no. 274 (P-241)(1419) 7. Dezember 1983 & JP-A-58 153 171 (SHINKO DENKI K.K.)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Beim Rangierbetrieb, insbesondere beim Zusammenlaufen schienengebundener Wagen, treten in Abhängigkeit von der Auf fahrgeschwindigkeit Verzögerungen (negative Beschleunigungen) auf, die beim Überschreiten zulässiger Höchstwerte zu einer Beschädigung z. B. eines zu transportierenden Gutes und bei sehr großen Überschreitungen zur Beschädigung des Wagens führen können. Die auftretenden Beschleunigungen sind insbesondere von der elastischen Verformung der Pufferfedern, der Reibungsarbeit bei der Pufferfederverformung und gegebenenfalls von der elastischen Verformung des Wagenrahmens (beim Überschreiten des maximalen Pufferhubes) abhängig.

Aus der EP-A1-0 391 047 sind ein Verfahren und eine Vorrichtung zur Bremsen-Prüfung und Bremsen-Überwachung bei Schienenfahrzeugen bekannt, wobei Sensoren im Bremssystem jedes Drehgestells Meßwerte liefern, deren weitere Verarbeitung eine Funktionsdiagnose der Bremsanlagen gestattet.

Aus der EP-A2-0 433 756 ist ein System zur lückenlosen Kontrolle des Transportes von Gütern bekannt, das hinsichtlich des Datenzugriffs und der Sicherheit gegen Datenmanipulationen optimiert ist. Dieses bekannte System weist Sensoren auf, die u. a. die Beschleunigung des zu transpotierenden Gutes messen. Die Problematik der Auffahrgeschwindigkeits-Brmittlung ist in der BP-A2-0 433 756 jedoch an keiner Stelle angesprochen.

Die US-A-4 752 053 beschreibt die Überwachung eines Eisenbahnzuges in bezug auf die Fahrzustände "vorwärts", "rückwärts", "in Bewegung", "im Stillstand", "gezogen" und "geschoben". Dabei wird die Beschleunigung gemessen integriert und zur Ermittlung des betreffenden Fahrzustandes weiter verarbeitet.

In der Praxis hat sich gezeigt, daß insbesondere die Kenntnis über die Auffahrgeschwindigkeiten im Hinblick auf haftungsrechtliche Fragen (z. B. bei Transportschäden) und bei der Transportgutüberwachung eine ganz bedeutende Rolle spielt.

Eine Auffahrgeschwindigkeitsmessung könnte mit einem Sensor erfolgen, der auf der Bewegung einer seismischen Masse durch die Einwirkung der Beschleunigung (Pendelprinzip) beruht. Durch Tiefabstimmung wirkt das Meßsystem als Beschleunigungsintegrator, dessen mechanische Auslenkung als Maß für die Auffahrgeschwindigkeit aufgezeichnet werden kann. Dieser Sensor weist ein hohes Gewicht, einen komplizierten Aufbau und eine schwierige elektronische Meßwerterfassung auf.

Der Erfindung liegt daher die Aufgabe zugrunde, ein Verfahren zum Ermitteln der Auffahrgeschwindigkeit eines schienengebundenen Wagens auf ein Hindernis zu schaffen, das mit einfachen Verfahrensschritten ausreichend genaue Ermittlungsergebnisse liefert.

Diese Aufgabe wird erfindungsgemäß durch ein Verfahren zum Ermitteln der Auffahrgeschwindigkeit eines schienengebundenen Wagens auf ein Hindernis gelöst, bei dem der zeitliche Verlauf der Beschleunigung des Wagens erfaßt wird und bei dem aus dem zeitlichen Verlauf der Beschleunigung durch zeitliche Integration die Auffahrgeschwindigkeit ermittelt wird, wobei als obere Integrationsgrenze der zuvor bestimmte Zeitpunkt des negativen Beschleunigungsmaximums herangezogen wird.

Ein wesentlicher Vorteil des erfindungsgemäßen Verfahrens besteht darin, daß die Ermittlung der Auffahrgeschwindigkeit ohne Kenntnis spezifischer Wagenparameter (z. B. Wagenmasse oder Federsteifigkeit) möglich ist. Da das negative Beschleunigungsmaximum zur Festlegung der oberen Integrationsgrenze herangezogen wird, beschränkt sich die Auswertung des zeitlichen Verlaufs der Beschleunigung des Wagens in vorteilhafter Weise auf den ungestörten Stauchvorgang; nachfolgende Pendelbewegungen und untergeordnete Strukturen werden dadurch in vorteilhafter Weise ausgeblendet. Bei ausreichender Bandbreite eines die Beschleunigung aufnehmenden Sensors sind auch Rahmenstöße problemlos erfaßbar. Das erfindungsgemäße Verfahren ist unter Einsatz handelsüblicher, kostengünstiger Bauteile (Beschleunigungssensoren, Microcontroller) kostengünstig ausführbar und erfordert zudem nur einen äußerst geringen Rechenaufwand, so daß eine sehr hohe Meßrate pro Stoßereignis erzielbar ist und viele Stoßereignisse gespeichert werden können.

Die Erfindung geht zunächst von der Überlegung aus, daß die zeitliche Integration der erfaßten Beschleunigung die Änderung der Relativgeschwindigkeit während des Auffahrvorgangs liefert:

$$\delta v(t_O) = v(t_O) - v_a = \int_{-\infty}^{t_O} b(t')dt' \qquad (1)$$

wobei $v_a$ die gesuchte absolute Anfangsgeschwindigkeit unter der Annahme darstellt, daß das Hindernis (z. B. Prellwaggon) vor dem Stoß in Ruhe ist. Bei einer relativen Geschwindigkeit zum Zeitpunkt $t_o$
$v_o = v(t_o)$ zwischen dem auffahrenden Wagen und dem Hindernis ergibt sich $v_a$ zu

$$v_a = v(t_o) - \delta v(t_o). \qquad (2)$$

Die vorliegende Erfindung basiert auf der wesentlichen Erkenntnis, daß die meßtechnisch nicht zugängliche Ge-

schwindigkeit $v_o$ in parameterunabhängiger Festlegung in einfacher Weise unter Ausnutzung von Symmetrien im zeitlichen Verlauf der Beschleunigung bestimmt werden kann. Im einfachsten Fall des vollelastischen Stoßes bewegen sich nämlich die beiden Auffahrpartner beim (negativen) Beschleunigungsmaximum, d. h. bei maximaler Verzögerung, mit identischer Geschwindigkeit, so daß für die relative Geschwindigkeit v zum Zeitpunkt $t_o$ gilt:

$$v_o = 0 \text{ für } db(t)/dt = 0. \tag{3}$$

Die obere Integrationsgrenze $t_o$ mit der zugehörigen Endgeschwindigkeit $v_o = 0$ kann also über eine einfache Extremwertbestimmung gefunden werden.

Allerdings sind gegebenenfalls richtungsabhängige Dämpfungseinflüsse zu berücksichtigen; beim Auftreten von Rahmenstößen zeigt sich jedoch, daß nur eine schwache Dämpfung wirksam wird. Das bedeutet, daß gerade in diesem häufig auftretenden Fall eine ausreichend exakte Ruhepunktbestimmung möglich ist.

Eine hinsichtlich der Verarbeitung der anfallenden Daten vorteilhafte Ausgestaltung des erfindungsgemäßen Verfahrens besteht darin, daß der erfaßte zeitliche Verlauf der Beschleunigung digitalisiert wird.

Eine besonders anwenderfreundliche Ausgestaltung des erfindungsgemäßen Verfahrens sieht vor, daß das negative Beschleunigungsmaximum und die Auffahrgeschwindigkeit optisch angezeigt werden.

Eine Vorrichtung zur Durchführung des erfindungsgemäßen Verfahrens enthält einen Beschleunigungssensor, der ein dem zeitlichen Verlauf der Beschleunigung des Wagens entsprechendes Ausgangssignal abgibt, einen Maximalwertdetektor, der das negative Maximum (negativer Extremwert) des Ausgangssignals ermittelt, einen Integrator, der das Ausgangssignal zeitlich integriert und der mit dem Maximum als Abbruchbefehl für die Integration beaufschlagbar ist, und eine Anzeigeeinheit zur Ausgabe des Integrator-Ausgangssignals. Die erfindungsgemäße Vorrichtung ist unter Verwendung handelsüblicher Bauteile einfach und kostengünstig realisierbar.

Eine vorteilhafte Ausgestaltung der erfindungsgemäßen Vorrichtung sieht vor, daß der Beschleunigungssensor ein mikromechanischer Beschleunigungssensor ist; besonders geeignet sind kapazitive, mikromechanisch hergestellte Beschleunigungssensoren.

Im Hinblick auf eine kostengünstige und schnelle Datenverarbeitung ist gemäß einer vorteilhaften Weiterbildung der erfindungsgemäßen Vorrichtung vorgesehen, daß die Vorrichtung einen Microcontroller enthält, der das Ausgangssignal des Sensors digitalisiert, speichert und bewertet.

Um die von der Vorrichtung ermittelten und/oder gespeicherten Daten beispielsweise zur statistischen Auswertung abgreifen zu können, ist die erfindungsgemäße Vorrichtung vorzugsweise mit einer Schnittstelle versehen, über die ein Datenaustausch zwischen der Vorrichtung und einer externen Datenverarbeitungseinrichtung möglich ist.

Die Erfindung wird nachfolgend beispielhaft anhand einer Zeichnung näher erläutert; es zeigen:

Figur 1            Verhältnisse bei einem Auffahrvorgang,
Figur 2            den zeitlichen Verlauf bewegungsbeschreibender Größen,
Figur 3            schematisch einen möglichen Ablauf des erfindungsgemäßen Verfahrens und die
Figuren 4 und 5      eine Ausgestaltungsmöglichkeit der erfindungsgemäßen Vorrichtung.

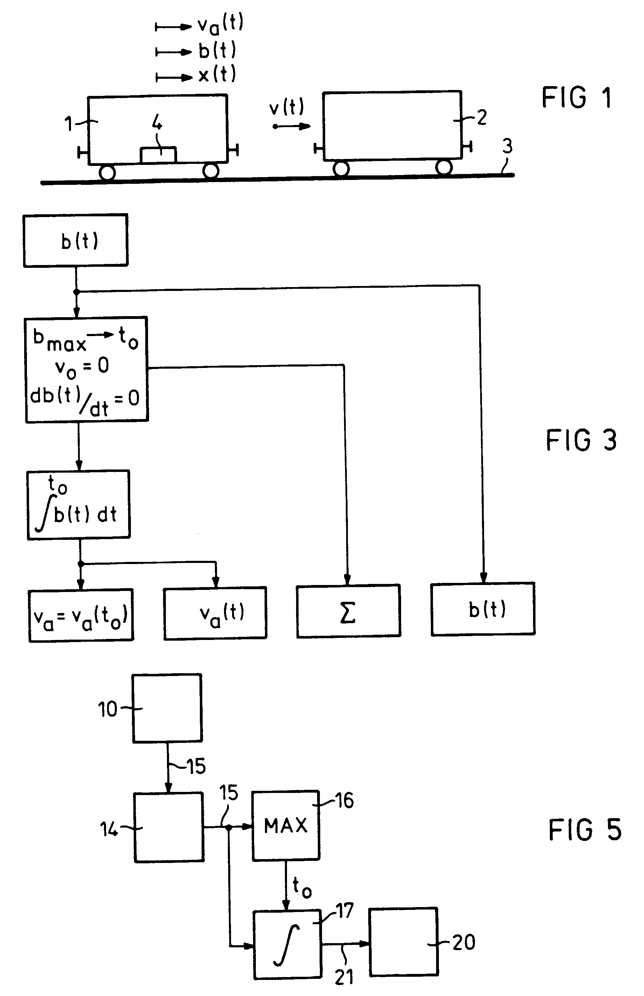

Figur 1 zeigt einen schienengebundenen Wagen 1, der unter Zurücklegung eines Federweges x(t) mit einer Geschwindigkeit $v_a(t)$ und einer Beschleunigung b(t) auf ein Hindernis in Form eines weiteren Wagens 2 auf einem Gleis 3 auf fährt. Die Wagen 1 und 2 weisen damit eine Relativgeschwindigkeit v(t) relativ zueinander auf.

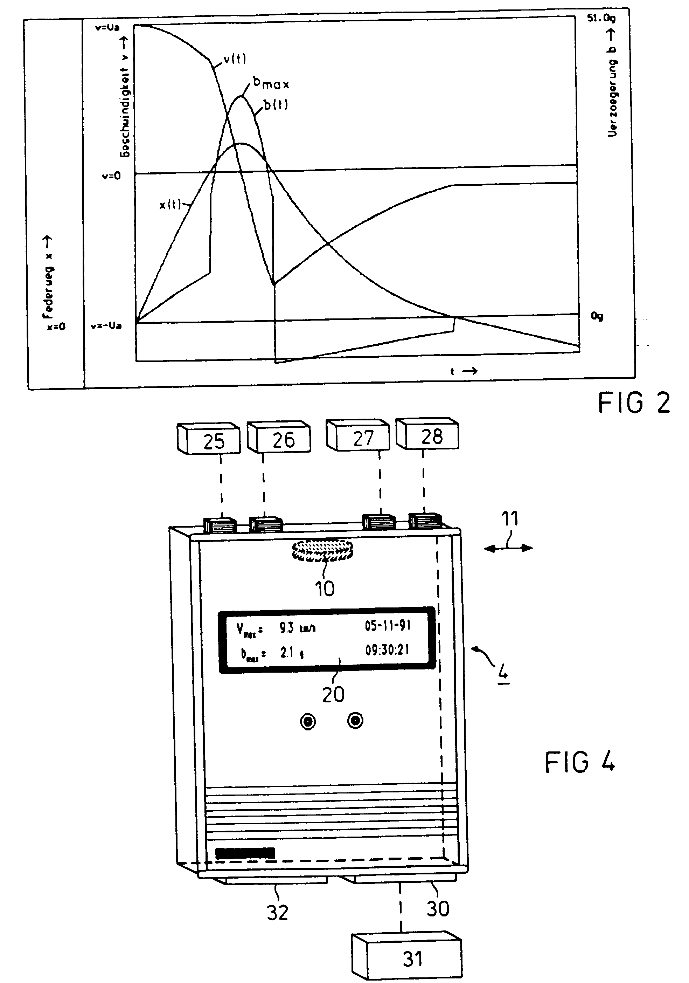

Figur 2 zeigt qualitativ die Zusammenhänge zwischen dem zurückgelegten Federweg x(t), der Relativgeschwindigkeit v(t) und dem Betrag der Beschleunigung b(t) während der Auffahrphase. Man erkennt eine mit zunehmender Verzögerung (negative Beschleunigung) b(t) abnehmende Geschwindigkeit v(t).

Die Erfindung basiert auf der wesentlichen Erkenntnis, daß sich die beiden Wagen 1 und 2 beim Maximum $b_{max}$ der Verzögerung (negative Beschleunigung) b(t) mit identischer Geschwindigkeit bewegen, so daß in diesem Zeitpunkt für die Relativgeschwindigkeit $v(t) = v(t_o) = 0$ gilt. Die obere Integrationsgrenze $t_o$ mit der dazugehörigen Endgeschwindigkeit $v_o = 0$ (Ruhepunkt der Relativbewegung) kann also über eine einfache Extremwertsuche gefunden werden. Nach Überschreiten des Extremwerts (negatives Maximum) setzt sich der elastische Stoßvorgang mit abnehmender Verzögerung b(t) und negativer zunehmender Relativgeschwindigkeit v(t) fort.

Figur 3 zeigt den von einem nachfolgend noch näher beschriebenen Beschleunigungssensor ermittelten zeitlichen Verlauf der Beschleunigung b(t), aus dem durch Bildung der ersten Ableitung das negative Beschleunigungsmaximum (Verzögerung) bmax bestimmt wird. Damit wird der Zeitpunkt $t_o$ ermittelt, bei dem die Relativgeschwindigkeit $v_o = 0$ ist und bei dem die integrative Auswertung der Beschleunigung b(t) abgebrochen werden soll. Nach dieser Festlegung der oberen Integrationsgrenze $t_o$ wird aus dem zeitlichen Verlauf der Beschleunigung b(t) durch zeitliche Integration die Auflaufgeschwindigkeit $v_a = v_a(t_o)$ ermittelt und mittels einer Anzeigeeinheit optisch dargestellt. Zusätzlich können der zeitliche Verlauf der Auf

fahrgeschwindigkeit $v_a$(t), durch Summenbildung der bisher insgesamt ermittelten negativen Beschleunigungsmaxima die Anzahl der Stöße bzw. Koppelvorgänge sowie der zeitliche Verlauf der Beschleunigung b(t) angezeigt werden.

Die Figuren 4 und 5 zeigen eine in Figur 1 nur schematisch dargestellte Vorrichtung 4 zur Durchführung des erfindungsgemäßen Verfahrens. Die Vorrichtung 4 enthält einen mikromechanisch aufgebauten Beschleunigungssensor 10, der auf die zu erwartende Beschleunigungsrichtung 11 ausgerichtet ist.

Gemäß Figur 5 ist dem Beschleunigungssensor 10 ein Micro-controller 14 nachgeordnet, der ein Ausgangssignal 15 des Sensors 10 digitalisiert und speichert. Der Microcontroller 14 kann zusätzlich das Ausgangssignal 15 beispielsweise durch Vergleich mit vorgegebenen Schwellwerten bewerten. Das Ausgangssignal 15 wird in digitalisierter Form einem Maximalwertdetektor 16 zugeführt, der negative Maxima $b_{max}$ des Ausgangssignals 15 ermittelt. Ein Integrator 17 ist eingangsseitig mit dem Ausgangssignal 15 beaufschlagt und erhält von dem Maximalwertdetektor 16 den Zeitpunkt $t_o$ des ermittelten negativen Maximums (maximale Verzögerung) $b'_{max}$ als Abbruchbefehl für die Integration. Dem Integrator 17 ist eine Anzeigeeinheit 20 nachgeordnet, die zumindest das Integrator-Ausgangssignal 21 optisch darstellt.

Gemäß Figur 4 ist dazu eine LCD-Anzeige vorgesehen, die bedarfsweise die Maximalbeschleunigung $b_{max}$ und die maximale Geschwindigkeit $v_{max}$ anzeigt. Ferner können auch weitere ermittelte Werte oder Daten (Datum/Uhrzeit) angezeigt werden. Die Vorrichtung 4 kann zusätzlich von weiteren externen Sensoren 25 bis 28 mit Sensorsignalen beaufschlagt werden, die gleichzeitig oder alternativ auf der Anzeigeeinheit 20 angezeigt werden. Die Vorrichtung 4 enthält eine standardisierte RS232-Schnittstelle 30, über die mit einer externen Datenverarbeitungseinrichtung - beispielsweise in Form eines externen Rechners 31 - ein Datenaustausch möglich ist. Die Vorrichtung 4 enthält zusätzlich eine serielle Schnittstelle 32 für Testfunktionen.


**Patentansprüche**

1. Verfahren zum Ermitteln der Auffahrgeschwindigkeit ($v_a$) eines schienengebundenen Wagens (1) auf ein Hindernis (2),

   - bei dem der zeitliche Verlauf der Beschleunigung (b(t)) des Wagens (1) erfaßt wird und
   - bei dem aus dem zeitlichen Verlauf der Beschleunigung (b(t)) durch zeitliche Integration die Auffahrgeschwindigkeit ($v_a$(t)) ermittelt wird, wobei als obere Integrationsgrenze ($t_o$) der zuvor bestimmte Zeitpunkt ($t_o$) des negativen Beschleuigungsmaximums ($b_{max}$) herangezogen wird.

2. Verfahren nach Anspruch 1,
   **dadurch gekennzeichnet**,
   daß der erfaßte zeitliche Verlauf der Beschleunigung (b(t)) digitalisiert wird.

3. Verfahren nach Anspruch 1 oder 2,
   **dadurch gekennzeichnet**,
   daß das negative Beschleunigungsmaximum ($b_{max}$) und die Auffahrgeschwindigkeit ($v_a$) optisch angezeigt werden.

4. Vorrichtung zur Durchführung des Verfahrens nach einem der Ansprüche 1 bis 3,

   - mit einem Beschleunigungssensor (10), der im Verwendungsfall ein dem zeitlichen Verlauf der Beschleunigung (b (t)) eines Wagens (1) entsprechendes Ausgangssignal (15) abgibt,
   - mit einem Maximalwertdetektor (16), der im Verwendungsfall das negative Maximum ($b_{max}$) des Ausgangssignals (15) ermittelt
   - mit einem Integrator (17), der im Verwendungsfall das Ausgangssignal (15) zeitlich integriert und der im Verwendungsfall mit dem Zeitpunkt ($t_o$) des negativen Maximums ($b_{max}$) als Abbruchbefehl für die Integration beaufschlagt ist, und
   - mit einer Anzeigeeinheit (20) zur Ausgabe des Integrator-Ausgangssignals (21).

5. Vorrichtung nach Anspruch 4,
   **dadurch gekennzeichnet**,
   daß der Beschleunigungssensor (10) ein mikromechanischer Beschleunigungssensor ist.

6. Vorrichtung nach Anspruch 4 oder 5,
   **dadurch gekennzeichnet**,
   daß die Vorrichtung einen Micro-Controller (14) enthält, der im Verwendungsfall das Ausgangssignal (15) des Beschleunigungssensors (10) digitalisiert, speichert und bewertet.

7. Vorrichtung nach einem der Ansprüche 4 bis 6,
**gekennzeichnet durch**
eine Schnittstelle (30), über die ein Datenaustausch zwischen der Vorrichtung (4) und einer externen Datenverarbeitungseinrichtung möglich ist.

## Claims

1. Method for determining the impact speed ($v_a$) of a rail-bound wagon (1) against an obstacle (2),

   - in which the variation over time of the acceleration (b(t)) of the wagon (1) is detected and,
   - in which the impact speed ($v_a$(t)) is determined from the variation over time of the acceleration (b(t)) by integration over time, the previously determined time ($t_o$) of the maximum negative acceleration ($b_{max}$) being used as the upper integration limit ($t_o$).

2. Method according to Claim 1, characterized in that the detected variation over time of the acceleration (b(t)) is digitised.

3. Method according to Claim 1 or 2, characterized in that the maximum negative acceleration ($b_{max}$) and the impact speed ($v_a$) are displayed visually.

4. Device for carrying out the method according to one of Claims 1 to 3,

   - having an acceleration sensor (10) which, when in use, emits an output signal (15) corresponding to the variation over time of the acceleration (b(t)) of a wagon (1),
   - having a maximum value detector (16) which, when in use, determines the maximum negative value ($b^*_{max}$) of the output signal (15)
   - having an integrator (17) which, when in use, integrates the output signal (15) over time and which, when in use, is supplied with the time ($t_o$) of the maximum negative value ($b^*_{max}$) as an abort instruction for the integration, and
   - having a display unit (20) for outputting the integrator output signal (21).

5. Device according to Claim 4, characterized in that the acceleration sensor (10) is a micromechanical acceleration sensor.

6. Device according to Claim 4 or 5, characterized in that the device contains a microcontroller (14) which, when in use, digitizes, stores and evaluates the output signal (15) of the acceleration sensor (10).

7. Device according to one of Claims 4 to 6, characterized by an interface (30) via which an exchange of data between the device (4) and an external data processing device is possible.

## Revendications

1. Procédé de détermination de la vitesse ($v_a$) à laquelle une voiture (1) sur rail percute un obstacle (2), dans lequel,

   - on détecte la courbe temporelle de l'accélération (b(t)) de la voiture (1) et
   - on détermine à partir de la courbe temporelle de l'accélération (b(t)) par intégration sur le temps la vitesse ($v_a$(t)) de percussion, l'instant ($t_o$), déterminé auparavant, du maximum ($b_{max}$) négatif de l'accélération étant utilisé comme limite supérieure ($t_o$) d'intégration.

2. Procédé suivant la revendication 1,
caractérisé en ce que
on numérise la courbe temporelle détectée de l'accélération (b(t)).

3. Procédé suivant la revendication 1 ou 2,

caractérisé en ce que
l'on affiche par des moyens optiques le maximum ($b_{max}$) négatif de l'accélération et la vitesse ($v_a$) de percussion.

4.  Dispositif pour la mise en oeuvre du procédé suivant l'une des revendications 1 à 3,

    -   comportant un capteur (10) d'accélération, qui, lorsqu'il est utilisé, fournit un signal (15) de sortie correspondant à la courbe temporelle de l'accélération (b(t)) d'une voiture (1),
    -   un détecteur (16) de valeur maximum, qui détermine, lorsqu'il est utilisé, le maximum négatif ($b_{max}$) du signal (15) de sortie,
    -   un intégrateur (17), qui, lorsqu'il est utilisé, intègre sur le temps le signal (15) de sortie et qui, lorsqu'il est utilisé, est chargé par l'instant ($t_o$) du maximum négatif ($b_{max}$) en tant qu'instruction d'interruption de l'intégration, et
    -   une unité (20) d'affichage destinée à la sortie du signal (21) de sortie de l'intégrateur.

5.  Dispositif suivant la revendication 4,
    caractérisé en ce que
    le capteur (10) d'accélération est un capteur d'accélération micromécanique.

6.  Dispositif suivant la revendication 4 ou 5,
    caractérisé en ce que
    le dispositif comprend un micro-contrôleur (14), qui, lorsqu'il est utilisé, numérise, mémorise et exploite le signal (15) de sortie du capteur (10) d'accélération.

7.  Dispositif suivant l'une des revendications 4 à 6,
    caractérisé par une interface (30), par l'intermédiaire de laquelle un échange de données entre le dispositif (4) et un dispositif extérieur de traitement de données peut s'effectuer.

FIG 1

FIG 3

FIG 5

FIG 2

FIG 4